# EUROPEAN PATENT SPECIFICATION

(11) **EP 3 594 842 B1**
(45) Date of publication and mention of the grant of the patent: **07.04.2021**
(21) Application number: 18182498.8
(22) Date of filing: 09.07.2018
(51) Int. Cl.: G06F 21/62

(54) **A SENSOR DEVICE FOR THE ANONYMIZATION OF THE SENSOR DATA AND AN IMAGE MONITORING DEVICE AND A METHOD FOR OPERATING A SENSOR DEVICE FOR THE ANONYMIZATION OF THE SENSOR DATA**
SENSORVORRICHTUNG ZUR ANONYMISIERUNG DER SENSORDATEN UND BILDÜBERWACHUNGSVORRICHTUNG UND VERFAHREN ZUM BETRIEB EINER SENSORVORRICHTUNG ZUR ANONYMISIERUNG DER SENSORDATEN
DISPOSITIF DE CAPTEUR POUR L'ANONYMISATION DE DONNÉES DE CAPTEUR, DISPOSITIF DE SURVEILLANCE D'IMAGES ET PROCÉDÉ DE FONCTIONNEMENT D'UN DISPOSITIF DE CAPTEUR POUR L'ANONYMISATION DES DONNÉES DE CAPTEUR

(43) Date of publication of application: 15.01.2020
(73) Proprietor: Argo AI GmbH, 80805 München (DE)
(72) Inventor: Friedmann, Felix, 85386 Eching (DE); Golakiya, Nirav, 81929 München (DE)
(74) Representative: Hofstetter, Schurack & Partner

(56) References cited:
- US-A1- 2008 180 538
- US-A1- 2013 108 105
- US-A1- 2017 187 994
- US-A1- 2017 289 504

## Description

The invention is concerned with a sensor device for the anonymization of sensor data which is collected by means of a sensor of the sensor device. The anonymization of the collected sensor data is performed by means of an anonymization unit of the sensor device itself. The invention also provides an image monitoring device comprising the sensor device. Finally, the invention is also concerned with a method for the operation of the inventive sensor device.

Image monitoring devices such as cameras with a CCD image sensor ensure public safety and order by providing means of surveillance of their surroundings. Such image monitoring devices may be incorporated in traffic infrastructures such as lamp-posts, street lights or advertising boards along roadsides, in order to provide surveillance of the traffic. In recent years, however, vehicles with such monitoring systems provide an additional means of surveillance of the traffic. The vehicles communicate with each other as well as the traffic infrastructure in order to transfer the collected data to ensure a better surveillance. Recently, the increasing interlinking of vehicles with each other or with the traffic infrastructure can lead to problems in terms of data privacy. Generally, at least one server processes and distributes data collected by sensors on board of the vehicles. The data can contain sensitive permission, such as faces, license plates or house numbers. At present, this information is transferred to the server and only then made anonymous before further processing.

Document US 2013/0108105 A1 discloses a method and an apparatus for masking the privacy region based on a monitored video image. A targeting detection unit extracts a target object from the decoded video and detects a privacy masking region from the extracted target object. A privacy region masking unit hides the privacy masking region. The privacy region may be detected via machine learning. However, the document does not disclose the possibility to use other sensor data than camera data, example LIDAR data. Furthermore, the camera data need to be stored in preparation of the anonymization. If the operation of the apparatus is interrupted, e.g. in case of failure, these stored data with unmasked regions may be extracted from that storage.

The document DE 10 2012 002 390 A1 discloses a method and a device for an anonymization of license plates. The device has a control section that receives the image of a license plate of a vehicle photographed by two cameras at two control points. The image that is taken by the two cameras of the license plate contains only parts of the license plates so that the license plate is partially anonymized. The control section determines the average speed of the vehicle between the control points. A computer determines whether the average speed exceeds the predetermined speed limit. If this is the case, a third camera takes a complete photograph of the license plate and allows the individual assignment of the license plate. However, this said document does not disclose any specific method of anonymization of camera data or sensor data besides not taking a full image of the sensor plate.

Document US 2011/0161140 A1 discloses an onboard unit for a road toll system which includes at least one camera, which is directed towards a passenger of a vehicle carrying the onboard unit and an evaluation unit, which counts the passengers of the vehicle in an image recorded by a camera. In one embodiment the evaluation unit obscures the detected passengers in the image recorded. However, no details about how the images are obscured is disclosed.

The document US 2008/180538 A1 discloses a system that includes an imaging device operable to acquire an image of a subject. The system also includes an anonym izer circuit operable to generate an anonymized image that includes a decreased fidelity of a property of a subject of the acquired image in response to an anonymization policy. The system further includes a display operable to provide a human-perceivable indication of the anonymization policy.

It is an object of the present invention to provide a universally applicable sensor device for the anonymization of the collected sensor data in a vehicle.

The object is accomplished by the subject matter of the independent claims. Advantageous developments with convenient and non-trivial further embodiments of the invention are specified in the following description, the dependent claims and the figures.

The invention provides a sensor device for collecting the sensor data of the surroundings of the sensor device and anonymizing the collected sensor data by means of an anonymization unit, wherein the sensor is a LIDAR sensor and/or a radar sensor. The collected data describes the surroundings of the sensor device. In other words, the collected sensor data comprises information or the physical information of the surroundings depending on the type of sensor. Alternatively, if the sensor is an image sensor (e.g. CCD sensor) of a camera then the information could be in the form of color and/or infrared pixels of the camera image. According to the invention, the sensor may be in form of an LIDAR sensor, wherein in this case, the information of the surroundings is in the form of 3D representations of the surroundings. A sensor device with such a sensor states a problem, in that the sensitive information such as a personal privacy and/or a face and/or a vehicle ID-plate and/or a house number, can be easily exposed in an image generated by the sensor. Such exposure of sensitive information needs to be avoided, hence, an anonymization of the sensitive information needs to be realized. This is realized by means of the anonymization unit, which is incorporated in the sensor device. The incorporation is realized in a way that the permanent storage of any predefined sensitive data (e.g. faces) is prevented or made impossible.

The sensor of the sensor device is a LIDAR sensor and/or a radar sensor. In other words, the use of the LIDAR sensor in the sensor device, can be used to obtain the information of the surrounding of the sensor device in the form of a 3D representation of the surrounding. This is in particular of advantage in case of an absence of enough light, such as during night, where the 3D representation of the surrounding by means of the LIDAR sensor can be used to obtain surveillance. Furthermore, in the case of the presence of ample amount of light, a CCD sensor provides an economic and efficient means of obtaining surveillance. It is further thinkable that a combination of the aforementioned sensors, that is the LIDAR sensor and the CCD sensor, can be used at the same time to obtain a high degree of surveillance of the surroundings. It is further thinkable, that other sensors such an optical image sensor and/or an infrared sensor and/or an ultrasonic sensor, may be used in the sensor device. The first two sensors are examples of 2D sensor, the remaining sensoris an example of a 3D sensor.

The sensor of the sensor device is designed to generate a sensor data stream, i.e. a sequence of images, for example, in the form of an MPEG stream. The sensor is coupled to the anonymization unit by means of a data path. The data path may comprise a cable and/or an electronic circuit and/or an optical fiber. Depending on the way of transmission of the sensor data stream from the sensor to the anonymization unit, the data path may contain no digital memory or only a volatile memory. The volatile memory may occur in the form of a processor register or a buffer or RAM, just to name examples. In cases where the transmission of the sensor data stream from the sensor to the anonymization unit can be performed at the speed at which the sensor generates the data, then no digital memory is required in the data path. As an example for the usage of a processor register, one might consider the transmission of the sensor data stream in a serial manner, for example, by means of a series bus architecture. Then a volatile memory may be needed in the data path. In the case of a volatile memory, without any supply voltage, the stored data is either lost or deleted in the volatile memory. This is of advantage, since the sensor data stream comprises the collected sensor data from the sensor which in itself comprises said sensitive data, which is data that carries sensitive information, and is sent to the anonymization unit for the anonym ization of the collected sensor data of the sensor data stream. It is necessary to ensure that the collected sensor data with the sensitive information is not stored in a memory.

In the case of loss of supply voltage, it needs to be ensured that none of the sensor data in the data path is accessible to a second person. In the case, when no digital memory is needed in the data path, it is ensured that no data is accessible to a second person. However, in the case where a memory is needed in the data path, the problem of the accessibility of the sensor data stream, in the case of a sudden loss of supply voltage, is taken into account by the invention, also. This is ensured by using the memory only in form of a volatile memory which itself due to its property, loses or deletes the stored sensor data in the case of loss of supply voltage. Hence, it is ensured that self-deleting transmission of the sensor data stream from the sensor to the anonymization unit is realized.

According to the present invention, the anonymization unit comprises an analyzation module for applying a predefined privacy criterion in the sensor data stream in order to identify predefined sensitive data (e.g. faces). The analyzation module can be in form of a software program and/or an ASIC (Application-Specific Integrated Circuit) and/or an FPGA (Field Programmable Gate Array). Whereas, the sensitive data in the sensor data stream, can be in form of, e.g., privacy data and/or faces and/or vehicle ID-plates and/or house numbers. The predefined privacy criterion can be defined by means of at least a method or algorithm, such as an algorithm based on at least one edge information and/or shape information and/or color distribution and/or information of the original video/ sensor data stream and/or information of at least one reference data stream and/or machine learning data. In other words, at a particular instant of time, when the sensor data stream is transmitted to the anonymization unit, the analyzation module reads the particular sensor data provided in the sensor data stream at that point of time and on the basis of, e.g., an artificial neural network algorithm, it recognizes at least one region in that sensor data corresponding to the sensitive information.

Such a region or subset of sensor data from the sensor data stream are termed as sensitive data. That is the analyzation module is able to identify and classify at least one region or subset of sensor data in the sensor data stream as sensitive data. The rest of the sensor data stream may be classified as the regions of normal data, i.e. data that do not need anonymization. For example, in the case of a sensor data stream collected by a sensor device on a vehicle, this sensor data stream could include images of a traffic scene. At a point of time, the sensor data stream reaches the anonymization unit. At this point of time, the analyzation module analyzes the sensor data stream that may be comprising of information such of the surrounding vehicles in the surrounding of the vehicle. The analyzation module is able to identify and classify said sensitive data corresponding to sensitive information such as, e.g., at least one vehicle ID-plate, and it may mark these sensitive data.

According to the present invention, the anonymization unit further comprises a replacement module for replacing the sensitive data in the sensor data stream with pre-defined masking data, such that the sensor data is anonym ized in the sensor data stream before any storing in a non-volatile memory. In other words, the replacement module can comprise a software program and/or an ASIC and/or an FPGA, which is designed to replace the sensitive data in the sensor data stream by a pre-defined masking data, such as a blurring of the sensitive data or replacing a color distribution in the sensitive data with a monochrome color or a single color (e.g. white pixels or black pixels). This is of advantage because the anonymization of the sensitive data is realized without transforming the original image and/or inside the sensor data stream.

The said non-volatile memory can be, for example, a hard disc and/or a USB (Universal Serial Bus) and/or a data cloud. It is further thinkable that the collected sensor data could be transferred to a traffic supervision system, where the collected sensor data from different vehicles and/or static infrastructures, such as a camera on the lamp-posts and/or a traffic light can be stored in a non-volatile memory in the traffic supervision system. All in all, this enables the anonymization of the sensor data to take place in a real time on the way from the sensor, even before it is stored in the non-volatile memory. In other words, the sensor data stream which is captured by the sensor device is made directly anonymous before the sensor data stream is processed and transmitted to another device or system, especially outside the sensor device. Thus, the sensor data stream coming from the sensor device is directly anonym ized before the sensor data of the sensor data stream is stored in a non-volatile memory.

The invention also comprises embodiments that provide features which afford additional technical advantages.

In one embodiment, the sensor device can contain an encryption module, which is designed to encrypt at least a part of the sensor data stream before storing in the non-volatile memory. The encryption module can be in the form of an encryption software program and/or an ASIC and/or an FPGA that uses cryptography to prevent unauthorized access to a sensor data stored in the non-volatile memory. For example, after an accident of a vehicle carrying the non-volatile memory or after a stealing of the non-volatile memory, such as a hard disc, the sensor data stored in the hard disc is still protected due to the encryption of the sensor data by means of the encryption module.

In one embodiment, the analyzation module of the sensor device comprises at least one artificial neural network for analyzing the sensor data stream and/or the replacement module comprises at least one artificial neural network for replacing the sensitive data. The at least one artificial neural network of the analyzation module can be trained by machine learning method to identify the sensitive data in the sensor data stream. Similarly, the at least one artificial neural network of the replacement module can be trained by a machine learning method to replace the sensitive data on the basis of a pre-defined data value (i.e. the masking data), such as a monochrome pixel and/or a blurring of the sensitive data of the sensor data stream. This enables an efficient operation of the analyzation module and the replacement module of the sensor device. Hence, an efficient and reliable anonymization of the sensor data in real time by means of the inventive sensor device is realized. The analyzation module and the replacement module may share a common artificial neural network.

In one embodiment, the sensor data stream contains information from a traffic observation. In other words, the sensor device can be incorporated in a traffic infrastructure. The traffic infrastructure may comprise a static infrastructure, such as a lamp-post and/or a traffic light and/or a building facing a street and/or an advertising board of the roadsides. Additionally or alternatively, the sensor device can be incorporated on a mobile infrastructure of the traffic infrastructure, such as a vehicle, such as a car or a locomotive. This enables a surveillance of an entire traffic region, which includes at least moving vehicle on the street, at least one moving vehicle, such as a bicycle and/or a person walking on the pedestrian side along the street and/or events and/or activities taking place in a region alongside the street. Furthermore, the incorporation of the sensor device in the static infrastructure of the traffic infrastructure may enable to identify the number of people sitting in a vehicle which could be important in a case of a road toll system. Hence, a surveillance of the entire traffic region is achieved, which ensures a security and safety of the public transport. At the same time, the anonymization of the relevant sensitive data, such as the vehicle ID-plate as well as the faces of the people in the vehicle as well as on the pedestrian side along the street is realizable.

In one embodiment, the pre-defined privacy criterion may provide a definition for information that shall be anonymized in the sensor data stream as the sensitive data. In other words, based on information such as information of at least one edge and/or shape information and/or color distribution of a sensor data in the sensor data stream, an algorithm based on the recognition of a face region, enables the analyzation module of the sensor device to identify the sensitive data of the sensor data.

In one embodiment, the information that shall be anonymized in the sensor data stream may be a face and/or a vehicle ID-plate and/or a house number. This is an advantage, because this information is the most frequent sensitive data which needs to be anonymized in the sensor data stream.

In one embodiment, the data path may comprise at least one cable and/or an electronic circuit and/or an optical fiber. Hence, multiple options for a user of the sensor device may be provided for the transmission of the sensor data from the sensor to the anonymization unit.

In one embodiment, the sensor data stream may comprise raw data or MPEG encoded data. In other words, the sensor data stream may comprise three dimensional coordinate points, for example, in case of an LIDAR sensor, or a video or audio data depending on the type of sensor used. This is of advantage because this provides a flexibility to use different types of sensors to collect the information of the surrounding of the sensor device, since the sensor device is capable of processing different forms of raw data or MPEG encoded data. Furthermore, different characteristic features of the surrounding can be detected reliably, if different form of raw data or MPEG encoded data from different sensors are combined in order to obtain a surveillance of the surrounding.

In one embodiment, the replacement module is designed to generate a masking data on basis of a pre-defined data value (e.g. white pixels or black pixels) and/or by blurring an image region. In other words, the replacement module replaces the sensitive data marked by the analyzation module by pre-defined data values, such as monochrome color or by blurring the sensitive data. Hence, the anonymization of the sensor data is realized.

The invention also comprises an image monitoring device comprising a sensor device for the anonymization of collected sensor data by the sensor device. The image monitoring device may be incorporated in at least one static or stationary infrastructure, for example, a camera on a lamp-post for traffic surveillance or in a sub-way. Furthermore, the image monitoring device may be in form of a motor vehicle. The motor vehicle may comprise several sensors for respectively generating sensor data containing information about the surrounding of the motor vehicle. The motor vehicle can be a passenger vehicle or a locomotive or a truck or a motorbike. This is of advantage because this enables the image monitoring device to be incorporated in the entire infrastructure of a traffic or a city, so that a surveillance of the surroundings of the traffic or the city is ensured.

The invention further comprises a method for operating a sensor device for anonymizing a sensor data stream which is generated by a sensor of the sensor device. The first step of the inventive method includes identifying pre-defined sensitive data in the sensor data stream by means of a pre-defined privacy criterion via an analyzation module. In other words, the analyzation module can be a software program comprising of an artificial neural network algorithm which is designed to identify a sensitive data, such as a face and/or vehicle ID-plate and/or house number. The software module can further comprise an algorithm which is designed to at least one track moving region in a video frame, such as a Kalman filter or a particle filter or a Bayesian filter or characteristic extraction to track and detect the at least one moving region or the sensitive data in the sensor data stream.

After the identification of the sensitive data by the analyzation module, the inventive method further comprises a second step, including replace the sensitive data in the sensor data stream via a replacement module with pre-defined masking data, such that the sensor data is anonymized in the sensor data stream before any storing in a non-volatile memory. Hence, the inventive method enables an anonymization of the sensor data in real time.

In another embodiment of the inventive method, the sensor device can be a part of a vehicle such that the anonym ization of the sensor data via the sensor device is performed on board of the vehicle. The vehicle itself comprises several sensors for generating raw sensor data of the surroundings, such as LIDAR sensors and/or the CCD sensors. This is advantage because the vehicle can provide surveillance of its surrounding during its movement during the day as well as during the night, which is realizable due to the presence of different types of sensors. It is further thinkable, that the sensor device incorporated in the vehicle is switched on even when the vehicle is not operating or the vehicle is parked at a particular location. The obtained sensor data can be stored in a non-volatile memory in the vehicle itself. This is beneficial for security purposes, for example, in the case of a damage to a vehicle, the switched on sensor device can record the surrounding of the vehicle and identify the person concerned committing the crime.

In another embodiment of the inventive method, the anonymized sensor data stream can be transmitted to a traffic supervision system and/or a data cloud. This is of advantage because in the case of a theft of the vehicle, the obtained anonymized sensor data is still saved in a different safe location such as the traffic supervision system and/or the data cloud. This enables the security forces to identify the person committing the crime and enable procuring of the stolen vehicle.

The invention also comprises the various combinations of the features of the described embodiments, if not stated otherwise.
In the following an exemplary implementation of the invention is described. The figures show:
- Fig. 1: a schematic illustration of an embodiment of a sensor device; and
- Fig. 2: a schematic illustration of an embodiment of a method for operating the sensor device.
The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

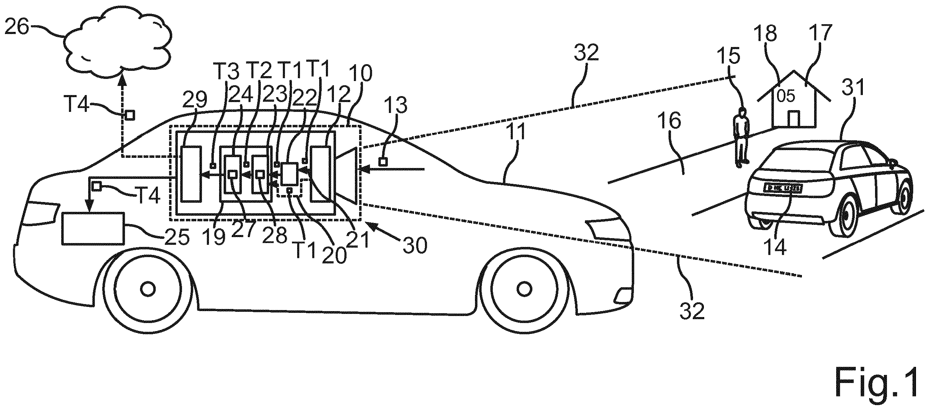

Fig. 1 shows a schematic illustration of an embodiment of a sensor device 10. The sensor device 10 is incorporated in a vehicle 11 that may be a passenger vehicle. The vehicle 11 may comprise a driver assistance system (not shown in the figure), which can provide, for example, an auto-pilot functionality. In other words, the driver assistance system may drive the vehicle 11 autonomously or fully automatically. The sensor device 10 comprises a sensor 12 that is a LIDAR sensor and/or a radar sensor. The sensor device 10 may be provided as a camera or more generally as an image monitoring device 30. However, since the vehicle 11 may comprise several sensors, the sensor device 10 can comprise a plurality of sensors or several sensor devices with different sensors may be provided.

In the current embodiment shown in Fig. 1, for the sake of clarity, it is assumed that the sensor device 10 comprises only one sensor 12. The image monitoring device 30 comprising the sensor device 10 can be in the form of a video camera or an infrared camera, which can be incorporated in the vehicle 11. The sensor 12 is designed to collect a sensor data and generate a sensor data stream 13 of the surrounding of the vehicle 11 from the collected sensor data. The field of view of the sensor 12 which is designed to collect the sensor data and generate the sensor data stream 13 of the surrounding of the vehicle 11 from the collected sensor data, is shown by means of dashed lines 32. The surrounding of the vehicle 11 may comprise another vehicle 31, which can drive in front of the vehicle 11. In the example shown, the vehicle 31 comprises a vehicle ID-plate 14, for example, "D NE U123". Beside the vehicle 31, there may be a pedestrian street 16, where there may be a person 15 walking in a direction opposite to that of the vehicle 11. Further, beside the pedestrian street 16, a house 17 may be located. The house 17 has a house number 18, for example, "05".

The sensor 12 may collect the sensor data of the sensor data stream 13, which can be in form of at least one video frame, and may generate a first sensor data stream T1 which can be in form of an MPEG encoded sensor data stream 13.

The sensor device 10 can further comprise an anonym ization unit 19. The first sensor data stream T1 may be passed on to the anonymization unit 19 by means of a first data path 20, which may comprise a cable and/or an electronic circuit and/or an optical fiber. The first sensor data stream T1 can be directly transmitted to the anonymization unit 19 via the first data path 20 which contains no digital memory. This is useful when the transmission of the first sensor data stream T1 from the sensor 12 to the anonymization unit 19 is performed at the speed at which the sensor 12 generates the data. However, in cases where, for example, a processor register is used, one might consider the transmission of the first sensor data stream T1 in a serial manner, for example, by means of a serial bus architecture. In this case, a volatile memory 22 may be needed in a second data path 21.

The anonymization unit 19 comprises an analyzation module 23 which may be in form of a software program or an ASIC or an FPGA. The analyzation module 23 is designed to identify pre-defined sensitive data, for example, a face of the person 15 and/or the vehicle ID-plates 14 and/or the house number 18, in the first sensor data stream T1 by means of a pre-defined privacy criterion. The privacy criterion may list or define those features in the first sensor data stream T1 that are identified and/or are classified as sensitive data. The skilled person may therefore define the sensitive data according to the current needs by providing a pre-defined privacy criterion accordingly.

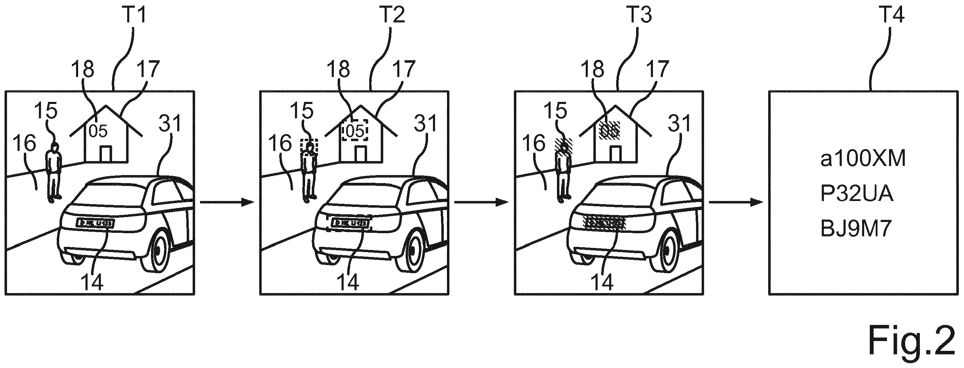

As shown in Fig. 2 the analyzation module 23 may read in the first sensor data stream T1 and identify and/or classify the sensitive data, such as the face of the person 15, the vehicle ID-plate 14 and the house number 18, on the basis of a pre-defined privacy criterion. The pre-defined privacy criterion can include an algorithm such as a first artificial neural network algorithm 28 based on a machine learning data.

The analyzation module 23 may generate from the first sensor data stream T1 a second sensor data stream T2, in which the sensitive data are marked. For example the face of the person 15, the vehicle ID-plate 14 and the house number 18 are marked as sensitive data via a respective quadratic or rectangular region (bounding box), as shown by dashed lines. However, it is thinkable that the regions depicting the sensitive data can be adjusted according to the shape of the sensitive data. For example, the face of the person 15 may be marked via a circular region or an oval region, whose area is just enough to mark the face of the person 15. This can be done to incorporate a maximum possible allowable information in the second sensor data stream T2. Alternatively, individual pixels in the second data stream T2 may be marked as being either sensitive data or non-sensitive data. This avoids the use of a standard shape like a rectangle or an oval.

Thus, the first sensor data stream T1 is transmitted from the sensor 12 to the analyzation module 23 of the anonym ization unit 19. Here, the first sensor data stream T1 is converted to the second sensor data stream T2, which includes the sensitive data, such as the face of the person 15, the vehicle ID-plate 14 and the house number 18, which are marked as sensitive data. Instead of converting the first sensor data stream T1 into a second sensor data stream T2, the first sensor data stream T1 may be forwarded unchanged and the information identifying the sensitive data may be provided separately, e.g. by means of coordinates of regions that are identified as the sensitive data in the first sensor data stream T1. For the sake of simplicity, the following description assumes that a second sensor data stream T2 is provided, although the first sensor data stream T1 may be used instead with the information regarding the marked regions provided separately.

The anonymization unit 19 further comprises a replacement module 24, which is designed to replace the sensitive data of the second sensor data stream T2 with a pre-defined masking data, such that the second sensor data stream T2 is anonymized before being stored in any non-volatile memory, such as a hard disc 25 and/or a data cloud 26. The replacement module 24 may receive the second sensor data stream T2 with marked regions of the sensitive data and mask the sensitive data in the second sensor data stream T2, e.g., by means of an artificial neural network algorithm 27, as blurred regions or as regions with a pre-defined color which can be different from the color given by the sensitive data. Thus, the replacement module 24 converts the second sensor data stream T2 to a third sensor data stream T3. Hence, the anonymization of the first sensor data stream T1 to the third sensor data stream T3 is achieved. In other words, the process of anonymization of the first sensor data stream T1 to the third sensor data stream T3 can be done in real time of the entire sensor data stream 13.

The analyzation module 23 and the replacement module 24 may alternatively be provided as a single unit, e.g., a single neural network that may be trained to directly replace any sensitive data identified on the basis of the pre-defined privacy criterion.

The sensor device 10 which may be incorporated in the vehicle 11 forms a part of the vehicle 11, such that the anonymization of the sensor data stream 13 via the anonymization unit 19 is performed on board of the vehicle 11.

The sensor device 10 may further comprise an encryption module 29, which may be designed to encrypt the third sensor data stream T3 before storing the third sensor data stream T3, e.g., in said non-volatile memory, such as the hard disc 25 and/or the data cloud 26. The encryption module 29 can be software program comprising an encryption algorithm based on, for example, a transparent data encryption (TDE) or a cell level encryption (CLE). In other words, the encryption module 29 may receive the third sensor data stream T3 and process the third sensor data stream T3 by means of the encryption algorithm and convert the third sensor data stream T3 to a fourth sensor data stream T4. This fourth sensor data stream T4 is in form an encrypted data stream. The fourth sensor data stream T4 can be stored in the non-volatile memory, such as a hard disc 25 in the vehicle 11 and/or can be transmitted wirelessly to a traffic supervision system, not shown in the figure, and/or can be transmitted wirelessly to the data cloud 26. This is of advantage, because this enables a protection of the sensor data stream 13 in case of a theft or damage to the vehicle 11. Hence, the sensor device 10 enables the anonymization of the sensor data in real time on board of the vehicle 11. It is to be noted that the first sensor data stream T1, the second sensor data stream T2, the third sensor data stream T3 and the fourth sensor data stream T4 denote the different forms of the sensor data stream 13.

Overall, the example shows how the anonymization of sensor data may be achieved before any non-volatile or reconstructable data are generated.

## Claims

1. Sensor device (10) comprising a sensor (12) and an anonymization unit (19), wherein the sensor (12) is designed to generate a sensor data stream (13) and wherein the sensor (12) is coupled to the anonymization unit (19) by a data path (20,21) which contains no digital memory or only volatile memory (22), the anonymization unit comprising:
- an analyzation module (23) for identifying pre-defined sensitive data (14,18) in the sensor data stream (13) on the basis of a pre-defined privacy criterion; and
- a replacement module (24) for replacing the sensitive data (14,18) in the sensor data stream (13) with pre-defined masking data such that the sensor data is anonym ized in the sensor data stream (13) before any storing in a non-volatile memory (25,26),
**characterized in that** the sensor (12) is a LIDAR sensor and/or a radar sensor.

2. Sensor device (10) according to claim 1, containing an encryption module (29), which is designed to encrypt at least a part of the sensor data stream (13) before any storing in a non-volatile memory (25,26).

3. Sensor device (10) according to claim 1 or 2, wherein the analyzation module (23) comprises at least one artificial neural network (28) for analyzing the sensor data stream (13) and/or the replacement module (24) comprises at least one artificial neural network (27) for replacing the sensitive data (14,18).

4. Sensor device (10) according to any of the preceding claims, wherein the sensor data stream (13) contains information from a traffic observation.

5. Sensor device (10) according to any of the preceding claims, wherein the pre-defined privacy criterion provides a definition for information that shall be anonymized in the sensor data stream (13) as the sensitive data (14,18).

6. Sensor device (10) according to claim 5, wherein the information that shall be anonymized in the sensor data stream (13) are faces and/or vehicle ID-plates (14) and/or house numbers (18).

7. Sensor device (10) according to any of the preceding claims, wherein the data path (20, 21) is based on at least one cable and/or electronic circuit and/or optical fiber.

8. Sensor device (10) according to any of the preceding claims, wherein the sensor data stream (13) comprises raw data or MPEG-encoded data.

9. Sensor device (10) according to any of the preceding claims, wherein the replacement module (24) is designed to generate the masking data on the basis of a predefined data value (white pixels or black pixels) and/or by blurring an image region.

10. Image monitoring device (30) comprising a sensor device (10) according to any of the preceding claims.

11. Method for operating a sensor device (10) according to any of the preceding claims for anonymizing a sensor data stream (13) which is generated by a sensor (12) of the sensor device (10), including the steps of:
- identifying pre-defined sensitive data (14,18) in the sensor data stream (13) by means of a pre-defined privacy criterion via an analyzation module (23); and
- replacing the sensitive data (14,18) in the sensor data stream (13) via a replacement module (24) with pre-defined masking data such that the sensor data is anonym ized in the sensor data stream (13) before any storing in a non-volatile memory (25,26),
**characterised in that** the sensor is a LIDAR sensor and/or a radar sensor.

12. Method according to claim 11, wherein the sensor device (10) is part of a vehicle (11) such that the anonymization of the sensor data via the sensor device (10) is performed on board the vehicle (11).

13. Method according to claim 11 or 12, wherein the anonym ized sensor data stream (13) is transmitted to a traffic supervision system and/or a data cloud (26).

## Patentansprüche

1. Sensorvorrichtung (10) umfassend einen Sensor (12) und eine Anonymisierungseinheit (19), wobei der Sensor (12) dazu ausgestaltet ist, einen Sensordatenstrom (13) zu erzeugen und wobei der Sensor (12) an die Anonymisierungseinheit (19) durch einen Datenpfad (20, 21) gekoppelt ist, der keinen digitalen Speicher oder nur einen flüchtigen Speicher (22) enthält,
wobei die Anonymisierungseinheit aufweist:
- ein Analysemodul (23) zum Identifizieren vordefinierter sensibler Daten (14, 18) in dem Sensordatenstrom (13) auf Basis eines vordefinierten Datenschutz-Kriteriums; und
- ein Austauschmodul (24) zum Ersetzen der sensiblen Daten (14, 18) in dem Sensordatenstrom (13) durch vordefinierte Maskierungsdaten, so dass die Sensordaten in dem Sensordatenstrom (13) vor einem Speichern in einem nicht-flüchtigen Speicher (25, 26) anonymisiert werden,
**dadurch gekennzeichnet, dass** es sich bei dem Sensor (12) um einen LIDAR-Sensor und/oder einen Radar-Sensor handelt.

2. Sensorvorrichtung (10) nach Anspruch 1, enthaltend ein Verschlüsselungsmodul (29), welches dazu ausgestaltet ist, wenigstens einen Teil des Sensordatenstroms (13) vor einem Speichern in einem nicht-flüchtigen Speicher (25, 26) zu verschlüsseln.

3. Sensorvorrichtung (10) nach Anspruch 1 oder 2, wobei das Analysemodul (23) mindestens ein künstliches neuronales Netzwerk (28) zum Analysieren des Sensordatenstroms (13) aufweist und/oder das Austauschmodul (24) mindestens ein künstliches neuronales Netzwerk (27) zum Ersetzen der sensiblen Daten (14, 18) aufweist.

4. Sensorvorrichtung (10) nach einem der vorhergehenden Ansprüche, wobei der Sensordatenstrom (13) Informationen aus einer Verkehrsbeobachtung enthält.

5. Sensorvorrichtung (10) nach einem der vorhergehenden Ansprüche, wobei das vordefinierte Datenschutz-Kriterium eine Definition für Informationen bereitstellt, welche in dem Sensordatenstrom (13) als die sensitiven Daten (14, 18) anonymisiert werden sollen.

6. Sensorvorrichtung (10) nach Anspruch 5, wobei es sich bei den Informationen, welche in dem Sensordatenstrom (13) anonymisiert werden sollen, um Gesichter und/oder Fahrzeugkennzeichenschilder (14) und/oder Hausnummern (18) handelt.

7. Sensorvorrichtung (10) nach einem der vorhergehenden Ansprüche, wobei der Datenpfad (20, 21) auf mindestens einem Kabel und/oder einer elektronischen Schaltung und/oder optischen Faser basiert.

8. Sensorvorrichtung (10) nach einem der vorhergehenden Ansprüche, wobei der Sensordatenstrom (13) Rohdaten oder MPEG-codierte Daten enthält.

9. Sensorvorrichtung (10) nach einem der vorhergehenden Ansprüche, wobei das Austauschmodul (24) dazu ausgestaltet ist, die Maskierungsdaten auf Basis eines vordefinierten Datenwerts (weiße Pixel oder schwarze Pixel) und/oder durch Weichzeichnen eines Bildbereichs zu erzeugen.

10. Bildüberwachungsvorrichtung (30) aufweisend eine Sensorvorrichtung (10) nach einem der vorhergehenden Ansprüche.

11. Verfahren zum Betreiben einer Sensorvorrichtung (10) nach einem der vorhergehenden Ansprüche zum Anonymisieren eines Sensordatenstroms (13), der durch einen Sensor (12) der Sensorvorrichtung (10) erzeugt wird, wobei das Verfahren die Schritte beinhaltet:
- Identifizieren vordefinierter sensibler Daten (14, 18) in dem Sensordatenstrom (13) mittels eines vordefinierten Datenschutz-Kriteriums über ein Analysemodul (23); und
- Ersetzen der sensiblen Daten (14, 18) in dem Sensordatenstrom (13) über ein Austauschmodul (24) durch vordefinierte Maskierungsdaten, so dass die Sensordaten in dem Sensordatenstrom (13) vor einer Speicherung in einem nicht-flüchtigen Speicher (25, 26) anonymisiert werden,
**dadurch gekennzeichnet, dass** es sich bei dem Sensor um einen LIDAR-Sensor und/oder einen Radar-Sensor handelt.

12. Verfahren nach Anspruch 11, wobei die Sensorvorrichtung (10) Teil eines Fahrzeugs (11) ist, so dass die Anonymisierung der Sensordaten über die Sensorvorrichtung (10) an Bord des Fahrzeugs (11) durchgeführt wird.

13. Verfahren nach Anspruch 11 oder 12, wobei der anonymisierte Sensordatenstrom (13) an ein Verkehrsüberwachungssystem und/oder eine Datencloud (26) übermittelt wird.

## Revendications

1. Dispositif de capteur (10), comportant un capteur (12) et une unité d'anonymisation (19), dans lequel le capteur (12) est conçu pour générer un flux de données de capteur (13), et dans lequel le capteur (12) est couplé à l'unité d'anonymisation (19) par un chemin de données (20, 21), qui ne contient pas une mémoire numérique ou seulement une mémoire volatile (22),
l'unité d'anonymisation (19) comportant :
- un module d'analyse (23) pour identifier des données sensibles prédéfinies (14, 18) dans le flux de données de capteur (13) sur la base d'un critère prédéfini en matière de la protection des données ; et
- un module de remplacement (24) pour remplacer les données sensibles (14, 18) dans le flux de données de capteur (13) par des données de masquage prédéfinies, en sorte que les données de capteur sont anonymisées dans le flux de données de capteur (13) avant tout stockage dans une mémoire non volatile (25, 26),
**caractérisé en ce que** le capteur (12) est capteur LIDAR et / ou un capteur radar.

2. Dispositif de capteur (10) selon la revendication 1, comportant un module de cryptage (29), qui est conçu pour crypter au moins une partie du flux de données de capteur (13) avant tout stockage dans une mémoire non volatile (25, 26).

3. Dispositif de capteur (10) selon la revendication 1 ou 2, dans lequel le module d'analyse (23) comporte au moins un réseau neuronal artificiel (28) pour analyser le flux de données de capteur (13), et / ou le module de remplacement (24) comporte au moins un réseau neuronal artificiel (27) pour remplacer les données sensibles (14, 18).

4. Dispositif de capteur (10) selon l'une quelconque des revendications précédentes, dans lequel le flux de données de capteur (13) comporte des informations provenant d'une observation de la circulation.

5. Dispositif de capteur (10) selon l'une quelconque des revendications précédentes, dans lequel le critère prédéfini en matière de la protection des données fournit une définition pour des informations, qui doivent être anonymisées dans le flux de données de capteur (13) en tant que données sensibles (14, 18).

6. Dispositif de capteur (10) selon la revendication 5, dans lequel les informations, qui doivent être anonymisées dans le flux de données de capteur (13), sont des visages et / ou des plaques d'identification des véhicules (14) et / ou des numéros de maison (18).

7. Dispositif de capteur (10) selon l'une quelconque des revendications précédentes, dans lequel le chemin de données (20, 21) est basé sur au moins un câble et / ou un circuit électronique et / ou une fibre optique.

8. Dispositif de capteur (10) selon l'une quelconque des revendications précédentes, dans lequel le flux de données de capteur (13) comporte des données brutes ou des données codées par MPEG.

9. Dispositif de capteur (10) selon l'une quelconque des revendications précédentes, dans lequel le module de remplacement (24) est conçu pour générer les données de masquage sur la base d'une valeur de données prédéfinie (des pixels blancs ou des pixels noirs), et / ou par le floutage d'une région d'image.

10. Dispositif de surveillance d'image (30), comportant un dispositif de capteur (10) selon l'une quelconque des revendications précédentes.

11. Procédé de fonctionnement d'un dispositif de capteur (10) selon l'une quelconque des revendications précédentes pour anonymiser un flux de données de capteur (13), qui est généré par un capteur (12) du dispositif de capteur (10),
comportant les étapes suivantes :
- identifier des données sensibles prédéfinies (14, 18) dans le flux de données de capteur (13) au moyen d'un critère prédéfini en matière de la protection des données par un module d'analyse (23) ; et
- remplacer les données sensibles (14, 18) dans le flux de données de capteur (13) via un module de remplacement (24) par des données de masquage prédéfinies, en sorte que les données sensibles sont anonymisées dans le flux de données de capteur (13) avant tout stockage dans une mémoire non volatile (25, 26),
**caractérisé en ce que** le capteur est un capteur LIDAR et / ou un capteur radar.

12. Procédé selon la revendication 11, dans lequel le dispositif de capteur (10) fait partie d'un véhicule (11), en sorte que l'anonymisation des données de capteur via le dispositif de capteur (10) est effectuée à bord du véhicule (11).

13. Procédé selon la revendication 11 ou 12, dans lequel le flux de données de capteur anonymisées (13) est transmis à un système de surveillance de la circulation et / ou un cloud de données (26).
